# FASCICULE DE BREVET EUROPEEN

(11) **EP 4 114 693 B1**
(45) Date de publication et mention de la délivrance du brevet: **29.05.2024**
(21) Numéro de dépôt: 21706978.0
(22) Date de dépôt: 25.02.2021
(51) Int. Cl.: B60S 1/24, F16C 11/06, F16C 11/10

(54) **SUPPORT DE BOITE A ROTULE, BIELLE ET PROCEDE D'ASSEMBLAGE CORRESPONDANTS**
KUGELGELENKSHALTERUNG, PLEUELSTANGE UND MONTAGEVERFAHREN DAVON
BALL-JOINT SUPPORT, CORRESPONDING CONNECTING ROD AND ASSEMBLY PROCESS

(30) Priorité: 02.03.2020 FR 2002064
(43) Date de publication de la demande: 11.01.2023
(73) Titulaire: Valeo Systèmes d'Essuyage, 78321 Le Mesnil Saint Denis (FR)
(72) Inventeur: KUCHLY, Nicolas, 78322 Le Mesnil - Saint Denis (FR); GIRODOT, Cyrille, 78322 Le Mesnil - Saint Denis (FR)
(74) Mandataire: Valeo Visibility
(86) Numéro de dépôt international: PCT/EP2021/054728
(87) Numéro de publication internationale: WO 2021/175702

(56) Documents cités:
- WO-A1-2014/198562
- FR-A5- 2 184 291
- GB-A- 2 123 479
- JP-U- S59 131 620

## Description

La présente invention relève du domaine des systèmes de tringlerie d'actionnement d'essuie-glaces. La présente invention concerne notamment un support de boîte à rotule pour une bielle d'un tel système. L'invention concerne également une bielle correspondante ainsi que son procédé d'assemblage avec un tel support.

Un véhicule automobile est classiquement équipé d'essuie-glaces pour assurer l'essuyage et le lavage du pare-brise et éviter que la vision qu'a le conducteur de son environnement ne soit perturbée. Ces essuie-glaces comprennent en général un bras d'actionnement d'un balai d'essuyage, effectuant un mouvement de va-et-vient angulaire. Les balais d'essuyage, généralement allongés, sont porteurs de lames racleuses réalisées en une matière élastique. En fonctionnement, ces lames racleuses frottent contre le pare-brise et évacuent l'eau en l'amenant en dehors du champ de vision du conducteur. Le bras d'actionnement de chaque balai d'essuyage est relié par son extrémité opposée au balai à un système de tringlerie pour son entraînement en rotation.

Le système de tringlerie comprend au moins une bielle dont chaque extrémité longitudinale est articulée sur une manivelle solidaire en rotation d'un arbre d'entraînement d'un essuie-glace, et plus particulièrement de son bras.

Chaque extrémité longitudinale de la bielle porte une boîte à rotule dans laquelle est monté un maneton de façon à former une liaison de type rotule. Le maneton est quant à lui solidaire d'une extrémité d'une manivelle dont une extrémité opposée est solidaire d'un arbre d'entraînement d'un essuie-glace.

Le système de tringlerie peut être de configuration simplifiée, c'est-à-dire une timonerie sans tube avec un arbre moteur qui forme l'axe d'un porte-balai côté conducteur et avec un palier de guidage en rotation d'un arbre d'entraînement qui forme l'axe d'un essuie-glace côté passager, la bielle permettant de relier les deux axes. D'autres configurations sont connues. Par exemple, il peut s'agir d'une timonerie classique avec un arbre moteur commandant deux axes pour deux bielles différentes.

Par ailleurs, le maneton peut être emboîté en force dans une cavité interne de la boîte à rotule. Il peut être maintenu dans la cavité par encliquetage, ou à l'aide d'un élément de retenue supplémentaire.

La boîte à rotule peut être surmoulée sur la bielle ou peut être verrouillée sur la bielle, par exemple en venant verrouiller par encliquetage ou à l'aide d'un autre dispositif supplémentaire. L'assemblage de la bielle nécessite plusieurs mouvements et implique donc plusieurs efforts de montage pour solidariser le maneton avec la boîte à rotule puis verrouiller l'ensemble sur la bielle.

Selon une autre solution connue, la boîte à rotule peut être réalisée par deux demi-boîtes assemblées autour du maneton. La boîte à rotule peut ensuite être assemblée à la bielle par encliquetage. L'effort d'encliquetage assure alors une double fonction pour maintenir d'une part la bielle sur la boîte à rotule et d'autre part la boîte à rotule sur le maneton. Cependant, en utilisation de la bielle, il existe un risque de démontage accidentel de la bielle lorsque les efforts dans la bielle sont trop importants.

En outre, selon la configuration de la boîte à rotule, l'assemblage du système de tringlerie sur les lignes d'assemblage de véhicule automobile peut nécessiter un outillage très spécifique tel que des pinces, des sertisseurs par exemple pour venir sertir la boîte à rotule sur le maneton. Cela nécessite également une mise en place et des efforts d'alignement pour assembler les différentes parties de la bielle du système de tringlerie. Un tel assemblage peut donc s'avérer complexe.

Le document FR 2 184 291 A5 divulgue un exemplaire de support de boîte à rotule, tel que connu dans l'art antérieur.

L'invention a pour objectif de pallier au moins partiellement ces inconvénients de l'art antérieur en proposant une solution permettant de réduire les efforts de montage d'une bielle avec une boîte à rotule destinée à recevoir un maneton solidaire d'une manivelle, tout en limitant le risque de démontage accidentel en utilisation de la bielle dans un système de tringlerie d'actionnement d'essuie-glaces.

L'invention a également pour autre objectif de permettre un assemblage simple de la bielle avec la boîte à rotule, qui puisse être réalisé manuellement sans l'aide d'outils spécifiques, sur les lignes d'assemblage de véhicule automobile.

À cet effet l'invention a pour objet un support de boîte à rotule pour une bielle d'un système de tringlerie d'actionnement d'essuie-glaces conforme à la revendication 1.

Ainsi, le support de boîte à rotule peut assurer à la fois une fonction de guidage en rotation et une fonction de maintien en position et de blocage anti-rotation de la bielle correspondante.

Les fonctions de guidage et/ou de maintien et/ou de blocage en rotation peuvent être assurées par un même élément ou par plusieurs éléments distincts. La fonction de blocage en rotation peut être par clippage.

On peut supprimer le surmoulage de la boîte à rotule sur la bielle comme dans certaines solutions de l'art antérieur. Également, il n'est plus nécessaire de livrer en trois parties la bielle, le maneton sur la manivelle et la boîte à rotule pour un assemblage manuel chez le client final tel qu'un constructeur automobile. La solution de l'invention permet de livrer pour assemblage d'un côté la bielle seule, et de l'autre côté la boîte à rotule portée par le support et déjà assemblée sur le maneton sur la manivelle. La bielle peut être assemblée par le client final sans efforts avec le support de boîte à rotule selon l'invention.

De plus, le fait d'avoir la boîte à rotule déjà livrée sur le maneton, permet de livrer graissé ce pré-assemblage et de monter un joint de boîte à rotule entre la manivelle et la boîte à rotule, ce qui permet d'améliorer l'étanchéité de la boîte à rotule sur le maneton.

Le support de boîte à rotule peut en outre comporter une ou plusieurs caractéristiques suivantes décrites ci-après, prises séparément ou en combinaison.

Le support peut être réalisé d'une seule pièce avec la boîte à rotule.

Le support est configuré pour coopérer avec une bielle de forme générale allongée.

Selon un aspect, le support définit un logement configuré pour recevoir au moins en partie la bielle dans la position finale d'assemblage. Ce logement peut comprendre au moins deux parties de logement.

Selon un exemple de réalisation, le logement comprend une première partie munie de la boîte à rotule configurée pour recevoir une extrémité longitudinale de la bielle présentant l'orifice complémentaire à la boîte à rotule.

Le logement peut comprendre une deuxième partie s'étendant transversalement par rapport à l'axe longitudinal de la boîte à rotule, configurée pour recevoir une portion longitudinale de la bielle dans le prolongement axial de l'extrémité longitudinale.

Le support présente par exemple un contour délimitant le logement de forme générale en U.

Selon un autre aspect, le support présente une forme générale allongée. Cette forme allongée s'étend transversalement à l'axe longitudinal de la boîte à rotule.

Le support est par exemple de forme générale oblongue.

Le logement défini par le support peut présenter une forme générale allongée.

Selon une option, le support présente une ouverture sur un côté du logement, en particulier un grand côté de la forme allongée, de façon à permettre l'insertion de la bielle dans le logement.

Le support comporte par exemple une paroi de fond depuis laquelle s'étend la boîte à rotule.

La première partie du logement peut comporter au moins une surface de guidage en rotation de l'extrémité longitudinale de la bielle.

Selon un mode de réalisation, la surface de guidage en rotation présente une forme au moins en partie circulaire, ou cylindrique, ou sphérique.

Une surface de guidage en rotation peut être formée par la paroi cylindrique externe de la boîte à rotule.

Une autre surface de guidage en rotation au moins en partie circulaire peut être formée sur la paroi de fond du support, distincte de la paroi cylindrique de la boîte à rotule.

La ou les surfaces de guidage en rotation prévues au niveau de la première partie de logement sont avantageusement centrées sur la boîte à rotule.

La première partie du logement peut présenter une forme générale au moins en partie sphérique.

La première partie du logement définit par exemple au moins un premier secteur angulaire configuré pour être agencé en regard de l'extrémité longitudinale de la bielle dans une première position d'assemblage.

La première partie du logement définit par exemple au moins un deuxième secteur angulaire configuré pour être agencé en regard de l'extrémité longitudinale de la bielle dans la position finale d'assemblage.

Les secteurs angulaires sont avantageusement conformés pour permettre une rotation de la bielle d'une amplitude de l'ordre de 90° entre le premier secteur angulaire et le deuxième secteur angulaire.

Selon un autre aspect, le logement comprend au moins une languette de maintien, présentant une surface d'appui configurée pour être en appui contre la bielle dans la position finale d'assemblage.

La première partie du logement peut comprendre au moins une languette de maintien au niveau du deuxième secteur angulaire, présentant une surface d'appui configurée pour être en appui contre l'extrémité longitudinale de la bielle dans la position finale d'assemblage.

La deuxième partie du logement peut comprendre au moins une languette de maintien présentant une surface d'appui configurée pour être en appui contre la portion longitudinale de la bielle dans la position finale d'assemblage.

Au moins l'une des surfaces d'appui forme une surface de reprise d'effort dans l'axe longitudinal de la boîte à rotule.

Selon un mode de réalisation, la deuxième partie du logement comporte deux côtés opposés de part et d'autre d'une paroi de fond. Les deux côtés peuvent présenter des épaisseurs différentes selon l'axe longitudinal de la boîte à rotule.

Au moins l'une des languettes est prévue du côté de plus grande épaisseur de la deuxième partie de logement.

Selon encore un autre aspect, la deuxième partie du logement présente au moins deux surfaces de maintien et de blocage en rotation opposées entre lesquelles la portion longitudinale de la bielle est configurée pour être reçue dans la position finale d'assemblage.

Les surfaces de maintien et de blocage en rotation sont par exemple planes ou sensiblement planes.

Avantageusement, le support comprend une rampe de guidage, configurée pour être en contact contre la bielle lors de l'assemblage par rotation du support avec la bielle. On assure ainsi un contact ligne sur plan entre la bielle et le support de boîte à rotule durant la rotation.

La rampe de guidage peut être agencée de façon à guider en rotation la portion longitudinale de la bielle dans le prolongement axial de l'extrémité longitudinale de la bielle.

Selon un autre aspect, le support peut comprendre une patte délimitant un côté de la deuxième partie du logement et présentant la rampe de guidage. Une telle patte peut s'étendre, depuis la première partie du logement, transversalement par rapport à l'axe longitudinal de la boîte à rotule. Cette patte offre une flexibilité au support dans l'axe de la boîte à rotule, en cas d'effort exercé par la bielle lors de l'assemblage par rotation, en particulier contre la rampe de guidage. Ainsi, le support se déforme durant le mouvement de rotation jusqu'à venir de l'autre côté de la bielle pour assurer un clippage.

La patte présente par exemple à son extrémité un chanfrein, définissant la rampe de guidage.

Enfin, la boîte à rotule présente une cavité interne configurée pour recevoir un maneton complémentaire.

La bielle coopérant avec le supporte de boîte de rotule présente une forme générale allongée et comporte à une extrémité longitudinale un orifice configuré pour recevoir une boîte à rotule complémentaire.

La bielle peut comporter une ou plusieurs caractéristiques suivantes décrites ci-après, prises séparément ou en combinaison.

La bielle peut en particulier être configurée pour être assemblée par rotation avec une boîte à rotule, avantageusement prévue sur un support de boîte à rotule tel que défini précédemment.

La bielle peut présenter au moins une surface de contact configurée pour coopérer avec un élément de guidage en rotation sur la boîte à rotule, avantageusement sur le support de boîte à rotule, pendant l'assemblage par rotation avec la boîte à rotule, avantageusement avec le support de boîte à rotule.

La bielle peut présenter au moins une surface de contact configurée pour coopérer avec le support de boîte à rotule, et en particulier avec un élément de maintien complémentaire sur le support de boîte à rotule dans une position finale d'assemblage.

La bielle peut comporter une surface de contact sur une bordure d'extrémité longitudinale de la bielle configurée pour venir en appui contre une languette de maintien au niveau du deuxième secteur angulaire de la première partie de logement du support.

La bielle peut comporter une surface de contact sur une bordure longitudinale de la bielle configurée pour venir en appui contre une languette de maintien au niveau de la deuxième partie de logement du support.

La bielle peut comporter deux surfaces de contact latérales de la bielle configurées pour venir en appui contre deux surfaces de maintien et de blocage en rotation opposées de la deuxième partie de logement du support.

Le bord d'extrémité longitudinale de la bielle peut être arrondi.

La bielle peut comporter une collerette bordant l'orifice. Cette collerette est configurée pour venir entourer la boîte à rotule complémentaire.

La collerette est par exemple réalisée par déformation d'une bande métallique pour former la bielle, suivant une surface perpendiculaire à la surface de la bande métallique. Une telle collerette aussi appelée bord tombé permet de garantir la reprise d'efforts en coopération avec la paroi cylindrique externe de la boîte à rotule.

L'invention concerne encore un système de tringlerie d'actionnement d'essuie-glaces comportant au moins un support de boîte à rotule tel que défini précédemment.

Le système de tringlerie comporte au moins une bielle telle que définie précédemment.

Le système de tringlerie comporte avantageusement des éléments de guidage en rotation complémentaires portés d'une part par la bielle et d'autre part par le support de boîte à rotule.

Le système de tringlerie comporte des éléments de maintien complémentaires portés d'une part par la bielle et d'autre part par le support de boîte à rotule, configurés pour maintenir la bielle dans une position finale d'assemblage avec le support de boîte à rotule.

Le système de tringlerie comporte des éléments de blocage en rotation complémentaires portés d'une part par la bielle et d'autre part par le support de boîte à rotule, configurés pour empêcher la rotation de la bielle depuis la position finale d'assemblage.

L'invention s'applique pour toute configuration du système de tringlerie, par exemple aussi bien pour une configuration classique que pour une configuration simplifiée.

L'invention concerne encore un procédé d'assemblage d'une bielle d'un système de tringlerie avec un support de boîte à rotule tels que définis précédemment.

Le procédé d'assemblage comprend les étapes suivantes :
- insérer la boîte à rotule dans un orifice à une extrémité longitudinale de la bielle par un mouvement de translation relatif selon l'axe longitudinal de la boîte à rotule,
- effectuer un mouvement de rotation relatif entre le support de boîte à rotule et la bielle, jusqu'à une position finale d'assemblage, dans laquelle la bielle est maintenue contre au moins un élément de maintien sur le support et bloquée en rotation par au moins un élément de blocage en rotation sur le support.

Le procédé peut en outre comporter une ou plusieurs caractéristiques suivantes décrites ci-après, prises séparément ou en combinaison.

La boîte à rotule peut être préalablement assemblée avec le maneton sur la manivelle.

Lorsque la boîte à rotule s'engage dans l'orifice de la bielle, l'extrémité longitudinale de la bielle vient en regard d'un premier secteur angulaire d'une première partie de logement du support.

Le mouvement de rotation peut être d'une amplitude de l'ordre de 90°.

Le mouvement de rotation est par exemple effectué jusqu'à ce que l'extrémité longitudinale vienne en regard d'un deuxième secteur angulaire de la première partie de logement du support et jusqu'à ce que la portion longitudinale de la bielle soit reçue dans une deuxième partie de logement du support.

Selon un aspect particulier, durant le mouvement de rotation, la portion longitudinale de la bielle peut être guidée par au moins une rampe de guidage sur une patte définissant la deuxième partie de logement. La patte peut se déformer pour venir se clipper de l'autre côté de la bielle.

Un tel assemblage permet de réduire les efforts lors du montage. De plus, la reprise d'effort est optimisée notamment grâce aux languettes de maintien en appui contre une ou plusieurs surfaces de contact de la bielle, et éventuellement grâce à un fût constant autour du maneton monté dans la boîte à rotule et entouré au moins en partie par la collerette de la bielle.

D'autres avantages et caractéristiques de l'invention apparaîtront plus clairement à la lecture de la description suivante donnée à titre d'exemple illustratif et non limitatif, et des dessins annexés parmi lesquels :
[Fig. 1] La figure 1 est une vue schématique en perspective d'un système de tringlerie d'actionnement d'essuie-glaces d'un véhicule automobile.
[Fig. 2] La figure 2 est une vue à plus grande échelle d'une partie du système de tringlerie de la figure 1 montrant une extrémité d'une bielle assemblée à un support de boîte à rotule recevant un maneton sur une manivelle selon un premier mode de réalisation.
[Fig. 3] La figure 3 est une vue en perspective montrant un joint de boîte à rotule disposé entre le support de boîte à rotule et la manivelle de la figure 2.
[Fig. 4] La figure 4 est une vue de dessous de l'extrémité longitudinale de la bielle assemblée au support de boîte à rotule.
[Fig. 5] La figure 5 est une vue en perspective du support de boîte à rotule des figures 2 à 4.
[Fig. 6] La figure 6 montre la bielle et le support de boîte à rotule des figures 2 à 4 dans une position d'engagement de la boîte à rotule dans un orifice de la bielle lors de l'assemblage de la bielle avec le support de boîte à rotule.
[Fig. 7] La figure 7 montre la bielle et le support de boîte à rotule de la figure 6 dans une position finale d'assemblage après rotation.
[Fig. 8] La figure 8 est une vue de côté du support de boîte à rotule des figures 2 à 7.
[Fig. 9] La figure 9 est une vue en perspective du support de boîte à rotule des figures 2 à 8.
[Fig. 10] La figure 10 est une vue éclatée d'une extrémité d'une bielle et d'un support de boîte à rotule recevant un maneton sur une manivelle selon un deuxième mode de réalisation avant assemblage.
[Fig. 11] La figure 11 est une vue de l'extrémité longitudinale de la bielle assemblée au support de boîte à rotule recevant un maneton sur une manivelle selon le deuxième mode de réalisation après rotation.
[Fig. 12] La figure 12 est une vue partielle d'une bielle du système de tringlerie de la figure 1 selon un exemple de réalisation.
[Fig. 13] La figure 13 est une vue partielle en perspective de la bielle de la figure 12.
[Fig. 14] La figure 14 montre le positionnement du support de boîte à rotule selon le premier mode de réalisation par rapport à la bielle, avec la boîte à rotule recevant le maneton sur la manivelle et engagée dans l'orifice de la bielle avant assemblage par rotation de la bielle et du support de boîte à rotule.
[Fig. 15] La figure 15 montre le support de boîte à rotule selon le premier mode de réalisation dans une première position intermédiaire par rapport à la bielle recevant la boîte à rotule pendant la rotation.
[Fig. 16] La figure 16 montre le support de boîte à rotule selon le premier mode de réalisation dans une deuxième position intermédiaire par rapport à la bielle recevant la boîte à rotule pendant la rotation.
[Fig. 17] La figure 17 montre le positionnement du support de boîte à rotule selon le premier mode de réalisation, recevant le maneton sur la manivelle et de la bielle dans la position finale d'assemblage après rotation.
[Fig. 18] La figure 18 représente de façon schématique une étape d'engagement de la bielle autour de la boîte à rotule recevant le maneton sur la manivelle et portée par le support de boîte à rotule selon le deuxième mode de réalisation.
[Fig. 19] La figure 19 montre le positionnement de la bielle recevant la boîte à rotule de la figure 18 avant assemblage par rotation de la bielle et du support de boîte à rotule.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

### Système de tringlerie d'actionnement d'essuie-glaces :

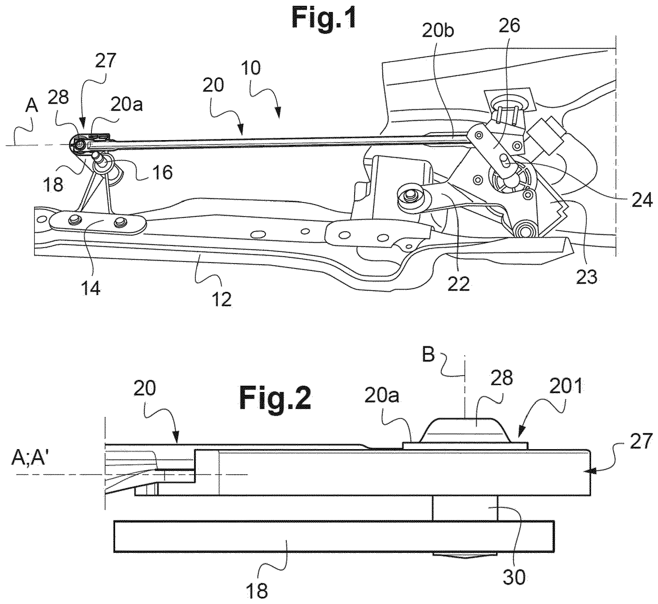

On se réfère d'abord à la figure 1 qui représente un système de tringlerie 10 pour l'actionnement d'essuie-glaces d'un véhicule automobile, nommé système 10 par la suite. À l'état monté dans un véhicule automobile, le système 10 est généralement fixé au bâti 12 du véhicule.

La configuration de la timonerie détaillée ci-après est un exemple non limitatif de timonerie simplifiée. Bien entendu, l'invention s'applique aussi pour d'autres configurations, notamment pour une timonerie classique (non illustrée) avec un moteur qui commande deux axes pour deux bielles différentes.

Selon l'exemple particulier de la figure 1, le système 10 comprend une platine 14 de support d'un palier de guidage en rotation d'un arbre 16 d'entraînement d'un premier essuie-glace (non représenté). Ce premier essuie-glace comprend classiquement un bras d'actionnement d'un balai d'essuyage (non représenté). Une extrémité longitudinale du bras d'actionnement est solidarisée à l'arbre 16 d'entraînement et son extrémité longitudinale opposée est raccordée au balai d'essuyage. Le balai d'essuyage porte une lame racleuse destinée à essuyer le pare-brise du véhicule.

Le système 10 comprend en outre au moins une manivelle 18 et une bielle 20.

La bielle 20 présente une forme générale allongée sensiblement rectiligne s'étendant le long d'un axe d'allongement A entre la première extrémité longitudinale 20a et une seconde extrémité longitudinale 20b. Les caractéristiques de la bielle 20 seront précisées par la suite.

Une extrémité de la manivelle 18 est solidaire en rotation de l'arbre 16 d'entraînement du premier essuie-glace. L'autre extrémité de la manivelle 18 est articulée à une première extrémité 20a de la bielle 20.

Le système 10 comprend une autre platine 22 de support d'un motoréducteur électrique 23, dont l'arbre de sortie 24 est destiné à entraîner un second essuie-glace (non représenté). Ce second essuie-glace, non représenté, est similaire à celui décrit dans ce qui précède.

Le système 10 comporte une autre manivelle 26 dont une extrémité est solidaire en rotation de l'arbre de sortie 24. L'autre extrémité de la manivelle 26 est articulée à une seconde extrémité 20b de la bielle 20.

Au moins l'une ou chaque extrémité 20a, 20b de la bielle 20 est articulée à une manivelle 18, 26 correspondante. En particulier, au moins l'une ou chacune des extrémités 20a, 20b de la bielle 20 peut être articulée par l'intermédiaire d'un support 27 comprenant un réceptacle nommé boîte à rotule 28, mieux visible sur la figure 2, et d'un maneton 30 correspondant, dont seule une portion est visible sur la figure 2. Le support 27, également nommé support de boîte à rotule, sera décrit plus en détail par la suite.

De façon générale, le maneton 30 est conformé pour être reçu au moins en partie dans une cavité interne complémentaire de la boîte à rotule 28, de façon à former une liaison de type rotule. Le maneton 30 peut présenter à titre d'exemple une portion de forme générale sphérique destinée à être reçue dans la boîte à rotule 28. Il peut comporter de plus une portion de forme générale cylindrique visible sur la figure 2 permettant le raccordement sur la manivelle correspondante. Le maneton 30 peut par exemple être fixé par sertissage, à une extrémité de la manivelle correspondante 18. Ainsi, la liaison entre le maneton 30 et la boîte à rotule 28 assure l'articulation entre la bielle 20 et la manivelle, par exemple 18, correspondante.

À l'assemblage, le maneton 30 peut s'étendre suivant une même direction axiale que l'arbre d'entraînement 16 solidaire de l'extrémité opposée de la manivelle 18 (figure 1), dans le même sens ou en variante dans le sens opposé, autrement dit vers le haut ou vers le bas par rapport à la manivelle 18, en référence à l'orientation de la figure 2.

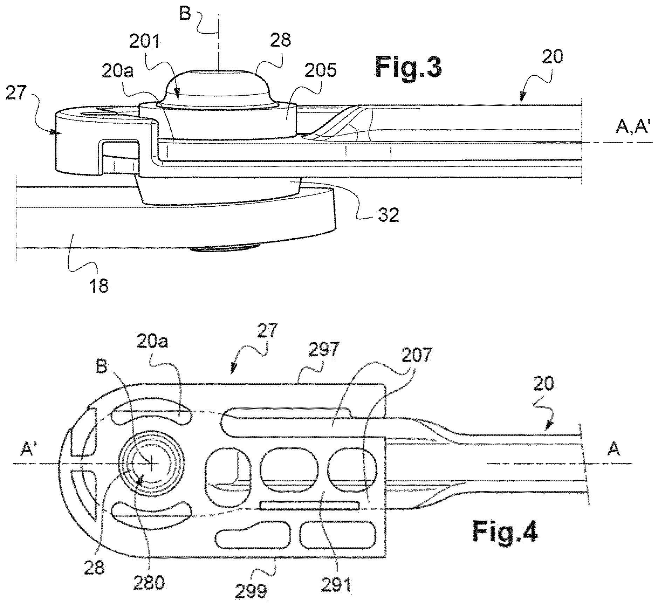

Un joint 32 de boîte à rotule peut être disposé autour de la portion, par exemple cylindrique, du maneton entre la manivelle 18 par exemple, et la boîte à rotule 28, comme représenté sur la figure 3. Ceci permet d'améliorer l'étanchéité de la boîte à rotule 28 sur le maneton (qui n'est plus visible sur la figure 3 du fait du joint de boîte à rotule).

Par ailleurs, deux supports 27 de boîtes à rotule 28 peuvent être agencés à l'identique sur les deux côtés (conducteur et passager). De façon alternative, les supports 27 de boîtes à rotule 28 peuvent être agencés de façon symétrique des deux côtés.

### Support de boîte à rotule :

En ce qui concerne le support 27 de boîte à rotule, comme dit précédemment il comporte la boîte à rotule 28 destinée à recevoir le maneton. Avantageusement le support 27 et la boîte à rotule 28 sont réalisés d'une seule pièce. Le support 27 de boîte à rotule 28 forme une pièce monobloc.

Le support 27, et en particulier la boîte à rotule 28, peuvent être réalisés en matière plastique.

Le support 27 de boîte à rotule 28 peut aussi être réalisé en plusieurs parties, par exemple en plusieurs matières plastiques notamment par comoulage, voire peut intégrer au moins une partie non plastique par exemple métallique.

La boîte à rotule 28 est destinée à être montée au niveau d'un orifice 201 à une extrémité longitudinale, 20a par exemple, de la bielle 20.

De façon générale, la boîte à rotule 28 présente une forme allongée s'étendant selon un axe longitudinal B. Cet axe longitudinal B est confondu avec l'axe longitudinal du maneton lorsqu'il est reçu dans la boîte à rotule 28.

La boîte à rotule 28 définit une cavité interne 280, visible sur la figure 4, destinée à recevoir au moins en partie le maneton complémentaire. Elle présente une forme générale complémentaire à celle du maneton qu'elle est destinée à recevoir. À titre d'exemple, la cavité interne 280 peut présenter une forme générale sphérique. L'axe de révolution de la cavité interne 280 correspond à l'axe longitudinal B de la boîte à rotule 28. La boîte à rotule 28 peut présenter une forme externe (par opposition à la cavité interne 280) d'un chapeau ou d'une cloche. Toute autre forme peut être envisagée. La boîte à rotule 28 peut aussi par exemple être de forme conique.

La cavité interne 280 est dimensionnée de façon à permettre l'insertion du maneton complémentaire dans la cavité interne 280. Elle est également avantageusement dimensionnée de façon à permettre le maintien du maneton dans la boîte à rotule 28 à l'état assemblé du système de tringlerie.

La cavité interne 280 est ouverte à au moins une extrémité axiale de la boîte à rotule 28. Ceci offre un accès pour l'insertion du maneton dans la boîte à rotule 28.

La boîte à rotule 28 peut comporter ou non une paroi formant fond de cavité, à l'extrémité axiale opposée à l'ouverture pour l'insertion du maneton.

Par ailleurs, le support 27 présente de façon générale une forme complémentaire à la forme de l'extrémité longitudinale 20a de la bielle 20 avec laquelle il est destiné à coopérer.

Par exemple, le support 27 présente une forme générale allongée selon un axe d'allongement A'. Cette forme allongée est complémentaire à la forme de l'extrémité longitudinale 20a de a bielle 20 par exemple de forme allongée. Le support 27 est par exemple de forme générale oblongue.

L'axe d'allongement A' du support 27 est transversal à l'axe longitudinal B de la boîte à rotule 28.

Le support 27 est configuré pour être assemblé par rotation avec la bielle 20. En particulier, le support 27 et la bielle 20 peuvent être destinés à être assemblés par un mouvement relatif de rotation de l'ordre de 90°, ou quart de tour.

Le mouvement d'assemblage est destiné à s'effectuer depuis une première position d'assemblage dans laquelle la boîte à rotule s'engage dans l'orifice 201 de la bielle 20 jusqu'à une position finale d'assemblage. Dans la position finale d'assemblage telle que représentée sur les figures 2 à 4, l'axe d'allongement A' du support 27 est confondu avec l'axe d'allongement A de la bielle 20. Le procédé d'assemblage sera décrit plus en détail par la suite.

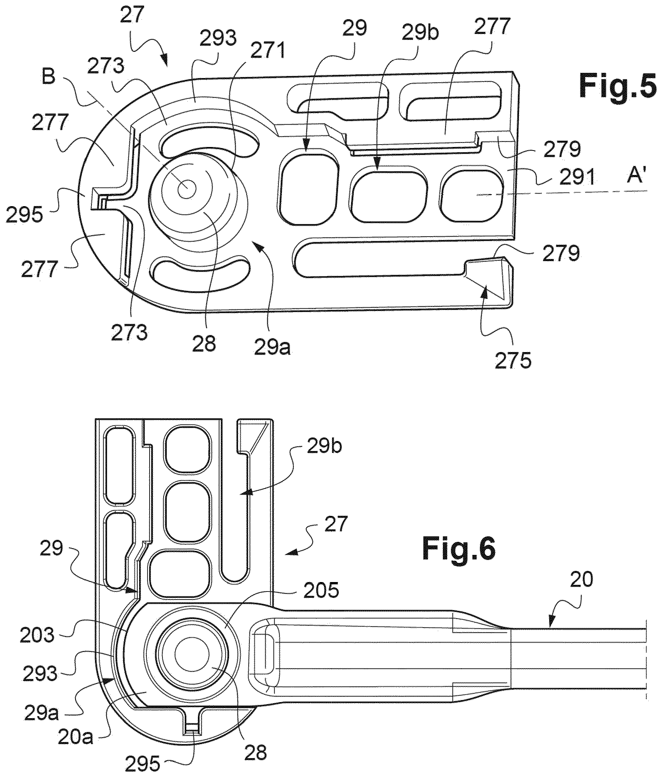

Afin de permettre l'assemblage par rotation, le support 27, mieux visible sur la figure 5, comporte avantageusement au moins un élément de guidage en rotation de la bielle autour d'un axe de rotation, jusqu'à une position finale d'assemblage. L'axe de rotation est confondu avec l'axe longitudinal B de la boîte à rotule 28.

Un tel élément de guidage en rotation est configuré pour coopérer avec un élément de guidage complémentaire prévu sur la bielle (non représentée sur la figure 5), comme précisé par la suite. Un tel élément de guidage en rotation sur le support 27 peut être de façon non exhaustive une surface de guidage 271, 273, par exemple au moins en partie circulaire, cylindrique ou encore sphérique, ou une rampe de guidage 275. Des exemples particuliers sont décrits par la suite.

Le support 27 comporte également avantageusement au moins un élément de maintien configuré pour coopérer avec la bielle (non représentée sur cette figure 5) et la maintenir dans la position finale d'assemblage avec le support 27 de boîte à rotule. Un tel élément de maintien est configuré pour coopérer avec un élément complémentaire sur la bielle, comme précisé par la suite. Un tel élément de maintien sur le support 27 peut par exemple être une languette de maintien 277. Des exemples particuliers sont décrits par la suite.

Le support 27 comporte également avantageusement au moins un élément de blocage en rotation configuré pour empêcher la rotation de la bielle depuis la position finale d'assemblage. Un tel élément de blocage est configuré pour coopérer avec un élément complémentaire sur la bielle 20, comme précisé par la suite. Le blocage en rotation peut par exemple être réalisé par une ou plusieurs surfaces 279 de maintien et de blocage entre lesquelles la bielle est destinée à venir se coincer. Un exemple de réalisation est décrit par la suite.

Les fonctions de guidage, de maintien, de blocage en rotation peuvent être assurées par un même élément ou par plusieurs éléments distincts.

De plus, le support 27, définit un logement 29 configuré pour recevoir au moins en partie la bielle 20 dans la position finale d'assemblage.

Le support 27 comporte par exemple une paroi 291 formant une paroi de fond du logement 29. La paroi 291 de fond peut ou non être ajourée.

Le logement 29 défini par le support 27 peut définir une forme générale allongée selon l'axe d'allongement A'.

Selon une option, le support 27 présente une ouverture sur un côté du logement 29, en particulier un grand côté de la forme allongée, de façon à permettre l'insertion de la bielle dans le logement 29.

De plus, ce logement 29 comprend par exemple une première partie 29a et une deuxième partie 29b. La paroi 291 de fond est commune, dans cet exemple, pour les deux parties de logement 29a, 29b.

La première partie 29a est munie de la boîte à rotule 28. Cette dernière s'étend depuis la paroi de fond 291, perpendiculairement au plan général défini par la paroi de fond 291, selon l'axe longitudinal B.

En référence aux figures 5 à 7, la première partie 29a du logement 29 est conformée pour recevoir l'extrémité longitudinale 20a de la bielle 20. Cette première partie 29a présente donc une forme complémentaire à la forme de l'extrémité longitudinale 20a. En outre, la première partie 29a est conformée de façon à permettre la rotation de cette extrémité longitudinale 20a autour de la boîte à rotule 28. Elle définit par exemple au moins deux emplacements entre lesquels l'extrémité longitudinale 20a de la bielle 20 peut tourner.

À titre d'exemple, la première partie 29a du logement 29 présente une forme au moins en partie sphérique.

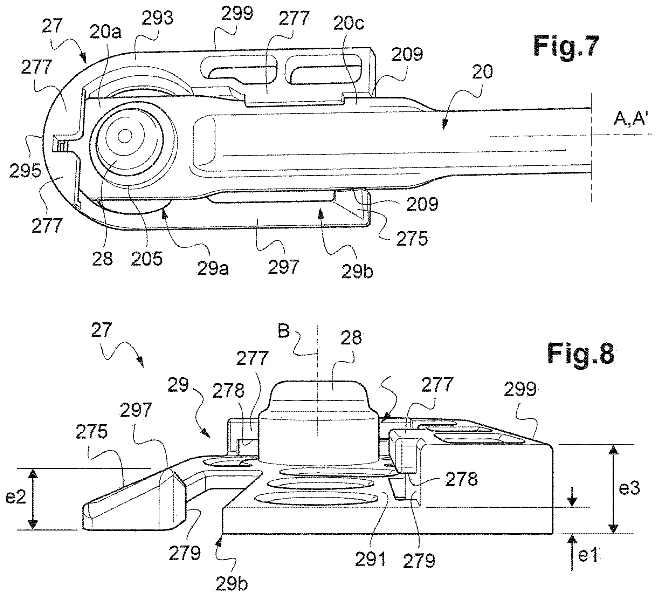

En outre, elle définit par exemple au moins deux secteurs en regard desquels l'extrémité longitudinale 20a de la bielle 20 est destinée à être agencée entre deux positions extrêmes d'assemblage (représentées sur les figures 6 et 7). Les secteurs sont de forme complémentaire à la forme de l'extrémité 20a de la bielle 20. Dans cet exemple avec une première partie 29a de logement sphérique, il s'agit de secteurs angulaires 293, 295.

Un premier secteur angulaire 293 est configuré pour être agencé en regard de l'extrémité longitudinale 20a de la bielle 20 dans une première position d'assemblage, comme représenté sur la figure 6.

Un deuxième secteur angulaire 295 est configuré pour être agencé en regard de l'extrémité longitudinale 20a de la bielle 20 dans la position finale d'assemblage, comme représenté sur la figure 7.

Les secteurs angulaires sont par exemple conformés pour permettre une rotation de la bielle 20 d'une amplitude de l'ordre de 90° entre le premier secteur angulaire 293 et le deuxième secteur angulaire 295.

En se référant de nouveau à la figure 5, la deuxième partie 29b du logement 29 s'étend longitudinalement selon l'axe d'allongement A'. Cette deuxième partie 29b est configurée pour recevoir, dans la position finale d'assemblage, une portion longitudinale 20c de la bielle 20 s'étendant dans le prolongement axial de son extrémité longitudinale 20a, comme représenté sur la figure 7.

En référence à la figure 8, la deuxième partie 29b du logement 29 peut comporter deux côtés opposés 297, 299 de part et d'autre de la paroi de fond 291. Ces deux côtés 297, 299 présentent par exemple des épaisseurs différentes selon l'axe longitudinal B de la boîte à rotule 28.

Un premier côté 297 peut présenter par exemple principalement une même épaisseur e1 que la paroi de fond 291. Un bord d'extrémité longitudinale de ce premier côté 297 peut présenter une épaisseur progressive depuis la première épaisseur e1 jusqu'à une deuxième épaisseur e2 supérieure à l'épaisseur e1 de la paroi de fond 291. Cette épaisseur progressive peut être réalisée par un chanfrein. L'inclinaison peut être de l'ordre de 20° à 70°, par exemple de préférence autour de 60°, par rapport au plan général défini par la paroi de fond 291.

Le premier côté 297 peut être séparé de la paroi de fond 291 par une fente, formant ainsi une patte offrant une flexibilité au support 27. Cette patte s'étend depuis la première partie 29a du logement 29 transversalement par rapport à l'axe longitudinal B de la boîte à rotule 28.

Un deuxième côté 299 peut présenter par exemple une épaisseur e3 supérieure aux épaisseurs e1, e2 de la paroi de fond 291 et du premier côté 297.

Par ailleurs, le logement 29 peut être conformé pour permettre le guidage en rotation de la bielle.

À cet effet le logement 29, et en particulier la deuxième partie 29b du logement 29, peut comporter au moins un élément de guidage en rotation tel que la rampe de guidage 275. Cette rampe de guidage 275 est définie par exemple par l'épaisseur progressive. La rampe de guidage 275 peut être prévue du côté 297 de plus faible épaisseur de la deuxième partie 29b du logement 29.

Selon l'exemple particulier décrit précédemment, la patte prévue sur le premier côté 297 présente une telle rampe de guidage 275 à son extrémité libre, c'est-à-dire à l'opposé de la première partie 29a de logement. La rampe de guidage 275 est définie par le chanfrein.

La rampe de guidage 275 est conformée de façon à être en contact contre la bielle, en particulier une portion longitudinale dans le prolongement de l'extrémité longitudinale de la bielle, pendant le mouvement de rotation pour l'assemblage de la bielle au support 27 de boîte à rotule, assurant ainsi un contact ligne sur plan entre la bielle et le support 27 de boîte à rotule.

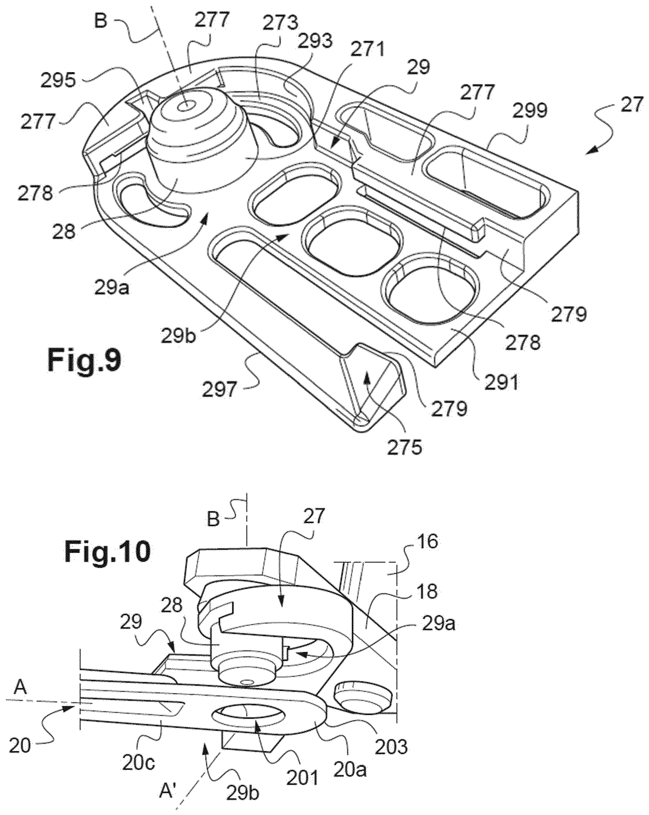

De plus, en référence à la figure 9, le logement 29, et en particulier la première partie 29a du logement 29, peut comporter au moins un élément de guidage en rotation tel que la ou les surfaces de guidage en rotation 271, 273 de l'extrémité longitudinale de la bielle (non représentée sur cette figure). La ou les surfaces de guidage 271, 273 en rotation prévues au niveau de la première partie 29a du logement 29 sont avantageusement centrées sur la boîte à rotule 28.

Une surface de guidage en rotation 271 peut être formée par la paroi cylindrique externe de la boîte à rotule 28. Cette surface de guidage en rotation 271 cylindrique est destinée à coopérer avec une surface complémentaire par exemple cylindrique autour d'un orifice à l'extrémité longitudinale de la bielle dans lequel est destiné à s'engager la boîte à rotule 28, comme décrit par la suite.

En alternative ou en complément, au moins une surface de guidage en rotation 273 peut être formée sur la paroi de fond 291 du support 27. Il s'agit par exemple de la surface de la paroi de fond 291 au droit d'au moins un secteur angulaire 293, 295. Une telle surface de guidage 273 peut ou non être au moins en partie circulaire.

Par ailleurs, le logement 29 peut être conformé pour permettre le maintien de la bielle 20 dans la position finale d'assemblage (figure 7).

À cet effet, en référence aux figures 7 à 9, le logement 29 peut comprendre au moins un élément de maintien tel qu'une languette de maintien 277, présentant une surface d'appui 278 contre laquelle la bielle 20 est configurée pour venir en appui dans la position finale d'assemblage. En particulier, la bielle 20 est destinée à être maintenue entre la paroi de fond 291 et la surface d'appui 278 d'une ou plusieurs languettes de maintien 277.

Une telle languette de maintien 277 peut être prévue au niveau de la première partie 29a du logement 29. En alternative ou en complément, une telle languette de maintien 277 peut être prévue au niveau de la deuxième partie 29b du logement 29.

Par exemple, la première partie 29a du logement 29 comprend au moins une languette de maintien 277, par exemple deux languettes de maintien 277, au niveau du deuxième secteur angulaire 295. Ces languettes de maintien 277 peuvent s'étendre selon un axe d'extension principal perpendiculaire à l'axe d'allongement A' du support 27 et à l'axe longitudinal B de la boîte à rotule 28.

Dans ce cas, la surface d'appui 278 d'au moins l'une ou chaque languette de maintien 277 est destinée à être en appui contre l'extrémité longitudinale 20a de la bielle 20 dans la position finale d'assemblage.

Cette surface d'appui 278 est dans cet exemple une surface inférieure de la languette de maintien 277, dans l'axe longitudinal B de la boîte à rotule, selon l'orientation des éléments sur la figure 8. Elle forme une surface de reprise d'effort dans l'axe longitudinal B de la boîte à rotule 28.

De même, en référence aux figures 7 à 9, la deuxième partie 29b du logement 29 peut comprendre au moins une languette de maintien 277 présentant une surface d'appui 278 contre laquelle la portion longitudinale 20c de la bielle 20 est en appui dans la position finale d'assemblage.

Une telle languette 277 est par exemple prévue du côté 299 de plus grande épaisseur e3 de la deuxième partie 29b du logement 29. Comme précédemment, la surface d'appui 278 est une surface inférieure de la languette de maintien 277, dans l'axe longitudinal B de la boîte à rotule, selon l'orientation des éléments sur la figure 8. Elle, forme une surface de reprise d'effort dans l'axe longitudinal B de la boîte à rotule 28.

En outre, le logement 29 peut être conformé pour assurer une fonction anti-rotation de la bielle 20 une fois le support 27 de boîte à rotule et la bielle 20 dans la position finale d'assemblage (figure 7). À titre d'exemple, le logement 29 peut être conformé pour permettre un clippage de la bielle 20 dans le logement 29 dans la position finale d'assemblage.

Selon un exemple de réalisation, la deuxième partie 29b du logement 29 peut présenter au moins deux surfaces 279 de maintien et de blocage en rotation opposées entre lesquelles la portion longitudinale 20c de la bielle 20 est destinée à être reçue dans la position finale d'assemblage. Il s'agit par exemple de surfaces 279 planes.

Selon l'exemple particulier décrit avec une patte du côté 297 offrant une flexibilité au support, cette patte présente par exemple l'une des surfaces de maintien opposées à son extrémité libre.

Ainsi, lors de l'assemblage par rotation, la portion longitudinale 20c de la bielle 20 est destinée à glisser contre la rampe de guidage 275. La patte sur le côté 297 de la deuxième partie 29b du logement 29 se déforme, du fait de l'effort exercé par la bielle 20, et vient se clipper de l'autre côté de la bielle 20.

Les figures 2 à 9 montrent un premier mode de réalisation du support 27 de boîte à rotule 28. Ce premier mode de réalisation est en particulier adapté pour un assemblage avec un maneton sur une manivelle correspondant qui est orienté vers le haut (en référence à l'orientation sur la figure 2) c'est-à-dire destiné à s'étendre selon un même sens que l'arbre d'entraînement solidaire de l'autre extrémité de la manivelle.

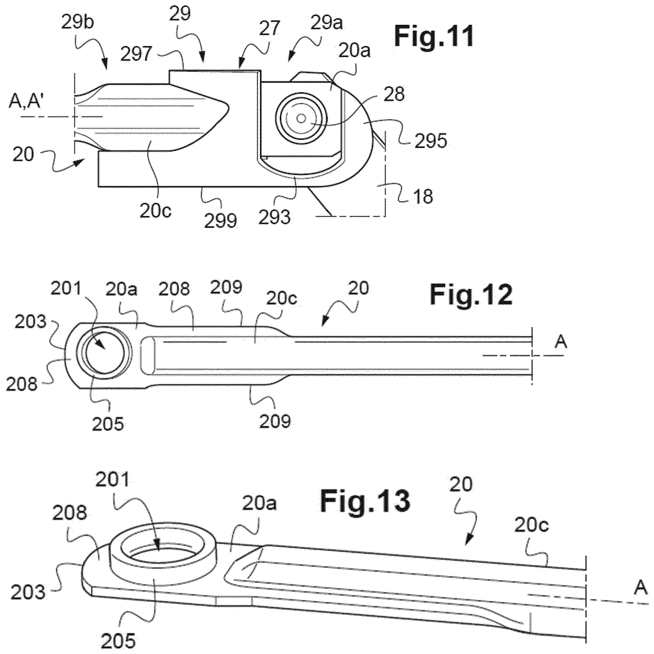

Un deuxième mode de réalisation du support 27 de boîte à rotule 28 est représenté sur les figures 10 et 11 dans une configuration déjà assemblée à un maneton sur une manivelle correspondante 18. Ce deuxième mode de réalisation diffère du premier mode de réalisation précédemment décrit en ce que le support 27 est en particulier adapté pour être assemblé avec un maneton orienté vers le bas selon l'orientation des éléments sur la figure 10, c'est-à-dire destiné à s'étendre dans un sens opposé à l'arbre d'entraînement solidaire de l'autre extrémité de la manivelle 18 à l'état assemblé du système de tringlerie.

Les caractéristiques du support 27 précédemment décrites en référence aux figures 2 à 9 s'appliquent également au support (27) selon le deuxième mode de réalisation des figures 10 et 11 et ne sont pas de nouveau décrites.

### Bielle :

En ce qui concerne la bielle 20, comme précédemment décrit, elle est destinée à coopérer avec un support 27 de boîte à rotule 28 selon l'une ou l'autre des variantes précédemment décrites.

La bielle 20 est par exemple réalisée par emboutissage d'une tôle.

Cette bielle 20 présente une forme générale allongée selon l'axe d'allongement A. Elle comporte à une extrémité longitudinale 20a un orifice 201 configuré pour recevoir la boîte à rotule 28 complémentaire.

Cette extrémité longitudinale 20a peut présenter une bordure d'extrémité 203 arrondie ou sensiblement arrondie.

Dans l'exemple de la figure 10, l'extrémité longitudinale 20a de la bielle 20 est plane autour de l'orifice 201.

Selon un exemple particulier de réalisation, représenté sur les figures 12 et 13, la bielle 20 peut comporter à son extrémité longitudinale 20a, une collerette 205 bordant l'orifice 201.

Cette collerette 205 est configurée pour venir entourer au moins en partie la boîte à rotule complémentaire à l'assemblage de la bielle 20 avec le support de boîte à rotule. Elle présente une forme complémentaire à la forme de la surface externe de la boîte à rotule. La collerette 205 définit par exemple une forme générale cylindrique. Toute autre forme peut être envisagée. Selon une variante de réalisation, la collerette 205 pourrait être de forme conique par exemple.

La collerette 205 est par exemple réalisée par déformation d'une bande métallique pour former la bielle, suivant une surface perpendiculaire au plan général défini par l'extrémité longitudinale 20a de la bielle 20. Cette collerette 205 est aussi appelée bord tombé.

Une telle collerette 205 permet de garantir une reprise d'efforts en coopération avec la paroi cylindrique externe de la boîte à rotule, à l'état assemblé du système de tringlerie.

Selon l'une ou l'autre des variantes des figures 10 à 13, le corps de la bielle 20 à l'exception de l'extrémité longitudinale 20a présentant l'orifice 201, peut présenter une section transversale en U.

Par ailleurs, l'extrémité longitudinale 20a et la portion longitudinale 20c dans son prolongement peuvent être élargies par rapport au reste du corps de la bielle 20.

Une telle bielle 20 est avantageusement configurée pour être assemblée par rotation avec un support de boîte à rotule tel que décrit précédemment.

À cet effet, l'extrémité longitudinale 20a est conformée de façon à coopérer en particulier avec la première partie 29a du logement 29 défini par le support 27 de boîte à rotule 28 (voir figures 6 et 7). La bordure d'extrémité arrondie ou sensiblement arrondie de la bielle 20 est par exemple destinée à venir en regard de l'un des secteurs angulaires 293, 295 dans les deux positions extrêmes d'assemblage.

De façon complémentaire au support, la bielle 20 peut comprendre au moins un élément de guidage en rotation. Il peut s'agir par exemple de la collerette 205, lorsqu'elle est prévue, qui est destinée à coopérer avec la surface externe cylindrique de la boîte à rotule 28, comme représenté sur les figures 3 et 7.

De plus, la bielle 20 présente au niveau de la portion longitudinale 20c, une surface de contact 207 (voir figure 4) destinée à être en face ou globalement en face de la paroi de fond 291 du support 27 à l'état assemblé, qui est destinée à être en contact avec la rampe de guidage 275 (figure 5) prévue sur le support 27. De telles surfaces de contact 207 peuvent être formées par des bordures longitudinales de la bielle 20 au niveau de la portion longitudinale 20c.

De façon complémentaire au support, la bielle 20 peut comprendre au moins un élément de maintien. Pour ce faire, la bielle 20 peut présenter au moins une surface de contact configurée pour coopérer avec le support de boîte à rotule, et en particulier avec un élément de maintien complémentaire sur le support de boîte à rotule dans la position finale d'assemblage.

À titre d'exemple, la bielle 20 peut présenter à son extrémité longitudinale une surface de contact 208 (figure 12) configurée pour venir en appui contre une languette de maintien 277 au niveau du deuxième secteur angulaire 295 de la première partie 29a de logement du support 27 (comme schématisé sur la figure 7).

En alternative ou en complément, la bielle 20 peut présenter une surface de contact 208 (figure 12) au niveau d'une bordure longitudinale de la bielle 20 configurée pour venir en appui contre une languette de maintien 277 au niveau de la deuxième partie 29b de logement du support 27 (comme schématisé sur la figure 7).

En variante ou en complément, la bielle 20 peut comporter deux surfaces de contact latérales 209 (figure 12) configurées pour venir en appui contre les deux surfaces de maintien et de blocage en rotation opposées 279 de la deuxième partie 29b de logement du support 27 (voir figures 5 et 7).

### Procédé d'assemblage :

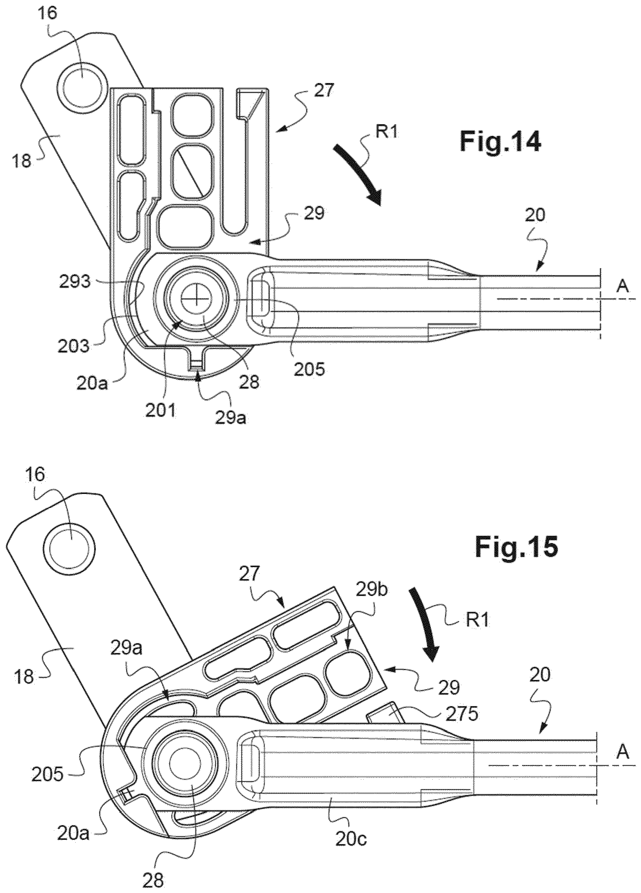

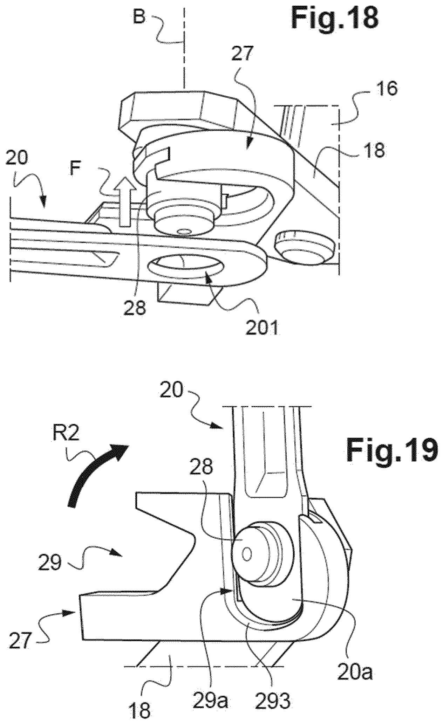

Les figures 14 à 17 représentent des étapes de montage d'une bielle 20 telle que représentée sur les figures 12 et 13 avec un support 27 de boîte à rotule selon le premier mode de réalisation des figures 2 à 9. De façon similaire, les figures 18 et 19 représentent des étapes de montage d'une bielle 20 avec un support 27 de boîte à rotule selon le deuxième mode de réalisation des figures 10 et 11.

Le procédé d'assemblage décrit ci-après peut s'appliquer à l'un ou l'autre des modes de réalisation.

On peut prévoir une étape préliminaire de fixation, par exemple par vissage, sertissage, ou autre, du maneton à la manivelle 18. Le maneton peut être fixé par une portion, par exemple cylindrique, qui n'est pas destinée à être entourée par la boîte à rotule 28 à l'assemblage.

Également, la boîte à rotule 28 peut être préalablement assemblée avec le maneton sur la manivelle 18.

En référence à la figure 14 pour le premier mode de réalisation et à la figure 18 pour le deuxième mode de réalisation, le procédé peut comprendre une étape pour insérer la boîte à rotule 28, portée par le support 27, dans l'orifice complémentaire 201 à l'extrémité longitudinale 20a de la bielle 20. Cette insertion peut se faire par un mouvement de translation relatif selon un axe confondu avec l'axe longitudinal de la boîte à rotule 28. Le sens d'insertion est schématisé par la flèche F sur la figure 18 concernant le deuxième mode de réalisation. Le mouvement de translation peut bien entendu se faire dans l'autre sens.

Le support 27 et la bielle 20 sont alors assemblés dans une première position représentée sur la figure 14 pour le premier mode de réalisation et sur la figure 19 pour le deuxième mode de réalisation.

Dans cette première position, l'extrémité longitudinale 20a de la bielle 20 est agencée en regard du premier secteur angulaire 293 de la première partie 29a du logement 29 défini par le support 27.

Par la suite, un mouvement de rotation relatif entre la bielle 20 et le support 27 de boîte à rotule 28, est effectué comme schématisé par la flèche R1 sur la figure 14 ou R2 sur la figure 19. Il s'agit notamment d'une rotation d'un quart de tour. Les flèches R1, R2 sont schématisées à titre illustratif. La rotation peut être effectuée dans l'autre sens.

Durant le mouvement de rotation, l'extrémité longitudinale 20a de la bielle 20 peut être guidée par la coopération de la surface bordant l'orifice 201, tel que la collerette 205 lorsqu'elle est prévue, avec la surface externe par exemple cylindrique de la boîte à rotule 28.

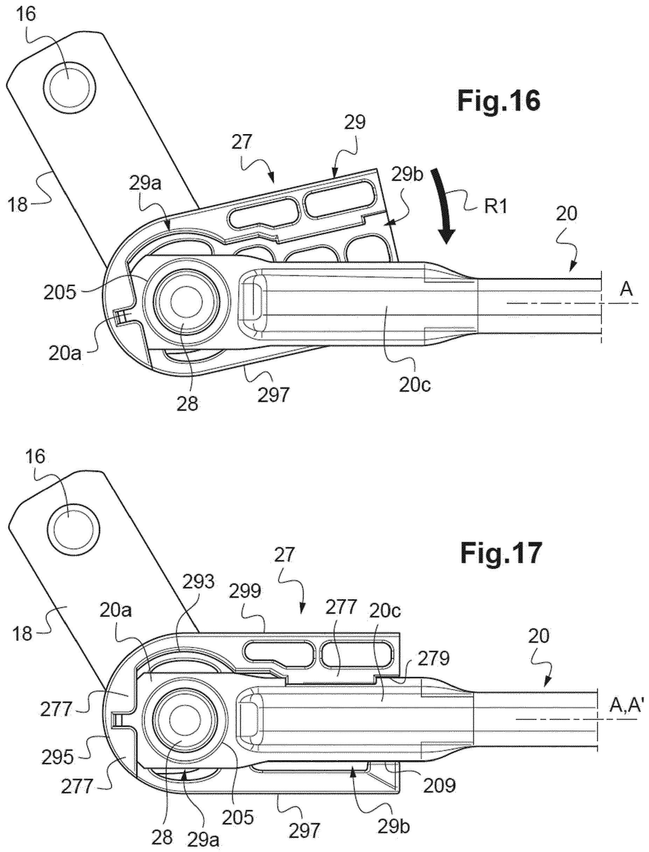

En alternative ou en complément, la portion longitudinale 20c de la bielle 20 peut être guidée par la rampe de guidage 275 (voir figure 15). La portion longitudinale 20c continue le mouvement de rotation (voir figure 16) et la patte du côté 297 de la deuxième partie 29b de logement peut par exemple se déformer pour venir se clipper de l'autre côté de la portion longitudinale 20c de la bielle 20, comme représenté sur la figure 17 pour le premier mode de réalisation ou la figure 11 pour le deuxième mode de réalisation.

Le support 27 et la bielle 20 sont dans une position finale d'assemblage dans laquelle l'extrémité longitudinale 20a de la bielle 20 est agencée en regard du deuxième secteur angulaire 295 de la première partie 29a du logement 29 défini par le support 27. De plus, dans cette position la portion longitudinale 20c de la bielle 20 est reçue dans la deuxième partie 29b du logement. La bielle 20 est maintenue par au moins un élément de maintien, tel que les languettes de maintien 277 sur le support 27 et est bloquée en rotation entre les deux surfaces opposées 279 du support 27. Ceci permet d'obtenir un blocage efficace anti-rotation dans la position finale d'assemblage, limitant le risque de libération en rotation de la bielle 20 par rapport au support 27 de boîte à rotule 28.

Ainsi, on peut avoir un montage simple de la bielle 20 avec le support 27 de boîte à rotule 28 ne nécessitant aucun outil spécifique. L'assemblage par translation suivi de la rotation jusqu'à la position finale d'assemblage est réalisée avec des efforts minimums du fait du guidage en rotation entre la bielle 20 et le support 27 de boîte à rotule 28. Cet assemblage peut être réalisé par un opérateur sur une ligne de constructeur automobile par exemple lorsque celui-ci reçoit un système de tringlerie en pièces détachées.

Dans la position finale d'assemblage, la coopération entre les languettes de maintien 277 et les surfaces de contact de la bielle 20 assure une reprise d'efforts suivant l'axe longitudinal B de la boîte à rotule. La coopération entre la surface externe de la boîte à rotule 28 et la collerette 205 par exemple sur la bielle 20, assure une reprise d'efforts dans les autres axes.

## Revendications

1. Support (27) de boîte à rotule (28) pour une bielle (20) d'un système de tringlerie (10) d'actionnement d'essuie-glaces, le support (27) comportant une boîte à rotule (28) s'étendant selon un axe longitudinal (B) et configurée pour être reçue dans un orifice (201) complémentaire sur la bielle (20), **caractérisé en ce que** le support (27) est configuré pour être assemblé par rotation avec la bielle (20), et comporte :
- au moins un élément de guidage en rotation (271, 273, 275) de la bielle (20) autour de l'axe longitudinal (B) de la boîte à rotule (28) jusqu'à une position finale d'assemblage,
- au moins un élément de maintien (277) configuré pour coopérer avec la bielle (20) et la maintenir dans la position finale d'assemblage avec le support (27) de boîte à rotule (28), et
- au moins un élément de blocage (279) en rotation configuré pour empêcher la rotation de la bielle (20) depuis la position finale d'assemblage,
le support (27) définissant un logement (29) configuré pour recevoir au moins en partie la bielle (20) présentant une forme générale allongée, dans la position finale d'assemblage, le logement (29) comprenant :
- une première partie (29a) munie de la boîte à rotule (28), configurée pour recevoir une extrémité longitudinale (20a) de la bielle (20) présentant l'orifice (201) complémentaire à la boîte à rotule (28), et
- une deuxième partie (29b) s'étendant transversalement par rapport à l'axe longitudinal (B) de la boîte à rotule (28), configurée pour recevoir une portion longitudinale (20c) de la bielle (20) dans le prolongement axial de l'extrémité longitudinale (20a), et
**caractérisé en ce que**
la deuxième partie (29b) du logement (29) présente au moins deux surfaces de maintien et de blocage en rotation (279) opposées entre lesquelles la portion longitudinale (20c) de la bielle (20) est configurée pour être reçue dans la position finale d'assemblage.

2. Support (27) selon la revendication 1, dans lequel la première partie (29a) du logement (29) comporte au moins une surface de guidage en rotation (271, 273) de l'extrémité longitudinale (20a) de la bielle (20).

3. Support (27) selon la revendication 1 ou 2, dans lequel la première partie (29a) du logement (29) présente une forme générale au moins en partie sphérique, et définit au moins :
- un premier secteur angulaire (293) configuré pour être agencé en regard de l'extrémité longitudinale (20a) de la bielle (20) dans une première position d'assemblage et
- un deuxième secteur angulaire (295) configuré pour être agencé en regard de l'extrémité longitudinale (20a) de la bielle (20) dans la position finale d'assemblage.

4. Support (27) selon l'une des revendications 1 à 3, dans lequel le logement (29) comprend au moins une languette de maintien (277), présentant une surface d'appui (278) configurée pour être en appui contre la bielle (20) dans la position finale d'assemblage.

5. Support (27) selon l'une des revendications 1 à 4, comprenant une rampe de guidage (275), configurée pour être en contact contre la bielle (20) lors de l'assemblage par rotation du support (27) avec la bielle (20).

6. Support (27) selon la revendication précédente, comprenant une patte délimitant un côté (297) de la deuxième partie (29b) du logement, s'étendant, depuis la première partie (29a) du logement (29), transversalement par rapport à l'axe longitudinal (B) de la boîte à rotule (28) et présentant la rampe de guidage (275).

7. Système pour un ensemble de tringlerie d'actionnement d'essuie-glaces comportant une bielle et un support selon l'une des revendications précédentes, la bielle (20) ayant une forme générale allongée et comportant à une extrémité longitudinale (20a) un orifice (201) configuré pour recevoir une boîte à rotule (28) complémentaire, **caractérisée en ce que** la bielle (20) est configurée pour être assemblée par rotation avec un support (27) de boîte à rotule (28) selon l'une des revendications précédentes, et **en ce qu'**elle présente :
- au moins une surface de contact (205, 203) configurée pour coopérer avec un élément de guidage en rotation (271, 273) sur le support (27) pendant l'assemblage par rotation, et
- au moins une surface de contact (208, 209) configurée pour coopérer avec un élément de maintien (277) et/ou de blocage en rotation (279) complémentaire sur le support (27) dans une position finale d'assemblage.

8. Procédé d'assemblage d'une bielle (20) d'un système de tringlerie (10) d'actionnement d'essuie-glaces selon la revendication précédente avec un support (27) de boîte à rotule (28) selon l'une des revendications 1 à 6, **caractérisé en ce qu'**il comprend les étapes suivantes :
- insérer la boîte à rotule (28) dans un orifice (201) à une extrémité longitudinale (20a) de la bielle (20) par un mouvement de translation relatif selon l'axe longitudinal (B) de la boîte à rotule (28),
- effectuer un mouvement de rotation relatif entre le support (27) de boîte à rotule (28) et la bielle (20), jusqu'à une position finale d'assemblage, dans laquelle la bielle (20) est maintenue contre au moins un élément de maintien (277) sur le support (27) et bloquée en rotation par au moins un élément de blocage en rotation (279) sur le support (27).

## Patentansprüche

1. Halterung (27) eines Kugelgelenkgehäuses (28) für eine Schubstange (20) eines Gestängesystems (10) zur Betätigung von Scheibenwischern, wobei die Halterung (27) ein Kugelgelenkgehäuse (28) umfasst, das sich entlang einer Längsachse (B) erstreckt und dafür ausgelegt ist, in einer komplementären Öffnung (201) an der Schubstange (20) aufgenommen zu werden, **dadurch gekennzeichnet, dass** die Halterung (27) dafür ausgelegt ist, durch Drehung mit der Schubstange (20) zusammengebaut zu werden, und umfasst:
- mindestens ein Element zur Drehführung (271, 273, 275) der Schubstange (20) um die Längsachse (B) des Kugelgelenkgehäuses (28) bis zu einer Endposition des Zusammenbaus,
- mindestens ein Halteelement (277), das dafür ausgelegt ist, mit der Schubstange (20) zusammenzuwirken und sie in der Endposition des Zusammenbaus mit der Halterung (27) des Kugelgelenkgehäuses (28) zu halten, und
- mindestens ein Drehsperrelement (279), das dafür ausgelegt ist, die Drehung der Schubstange (20) aus der Endposition des Zusammenbaus zu verhindern,
wobei die Halterung (27) eine Aufnahme (29) definiert, die dafür ausgelegt ist, wenigstens teilweise die Schubstange (20), die eine im Wesentlichen lang gestreckte Form aufweist, in der Endposition des Zusammenbaus aufzunehmen, wobei die Aufnahme (29) umfasst:
- einen mit dem Kugelgelenkgehäuse (28) ausgestatteten ersten Teil (29a), der dafür ausgelegt ist, ein Längsende (20a) der Schubstange (20) aufzunehmen, das die zu dem Kugelgelenkgehäuse (28) komplementäre Öffnung (201) aufweist, und
- einen sich quer bezüglich der Längsachse (B) des Kugelgelenkgehäuses (28) erstreckenden zweiten Teil (29b), der dafür ausgelegt ist, einen Längsabschnitt (20c) der Schubstange (20) in der axialen Verlängerung des Längsendes (20a) aufzunehmen, und
**dadurch gekennzeichnet, dass**
der zweite Teil (29b) der Aufnahme (29) mindestens zwei einander gegenüberliegende Halte- und Drehsperrflächen (279) aufweist, zwischen denen der Längsabschnitt (20c) der Schubstange (20) dafür ausgelegt ist, in der Endposition des Zusammenbaus aufgenommen zu werden.

2. Halterung (27) nach Anspruch 1, wobei der erste Teil (29a) der Aufnahme (29) mindestens eine Fläche zur Drehführung (271, 273) des Längsendes (20a) der Schubstange (20) umfasst.

3. Halterung (27) nach Anspruch 1 oder 2, wobei der erste Teil (29a) der Aufnahme (29) eine wenigstens teilweise kugelförmige allgemeine Form aufweist und mindestens definiert:
- einen ersten Winkelsektor (293), der dafür ausgelegt ist, in einer ersten Position des Zusammenbaus gegenüber dem Längsende (20a) der Schubstange (20) angeordnet zu werden, und
- einen zweiten Winkelsektor (295), der dafür ausgelegt ist, in der Endposition des Zusammenbaus gegenüber dem Längsende (20a) der Schubstange (20) angeordnet zu werden.

4. Halterung (27) nach einem der Ansprüche 1 bis 3, wobei die Aufnahme (29) mindestens eine Haltezunge (277) umfasst, die eine Anlagefläche (278) aufweist, die dafür ausgelegt ist, in der Endposition des Zusammenbaus an der Schubstange (20) anzuliegen.

5. Halterung (27) nach einem der Ansprüche 1 bis 4, welche eine Führungsrampe (275) umfasst, die dafür ausgelegt ist, sich während des Zusammenbaus der Halterung (27) mit der Schubstange (20) durch Drehung mit der Schubstange (20) in Kontakt zu befinden.

6. Halterung (27) nach dem vorhergehenden Anspruch, welche eine Lasche umfasst, die eine Seite (297) des zweiten Teils (29b) der Aufnahme begrenzt und sich vom ersten Teil (29a) der Aufnahme (29) aus quer bezüglich der Längsachse (B) des Kugelgelenkgehäuses (28) erstreckt und die Führungsrampe (275) aufweist.

7. System für eine Gestängeanordnung zur Betätigung von Scheibenwischern, welches eine Schubstange und eine Halterung nach einem der vorhergehenden Ansprüche umfasst, wobei die Schubstange (20) eine im Wesentlichen lang gestreckte Form aufweist und an einem Längsende (20a) eine Öffnung (201) umfasst, die dafür ausgelegt ist, ein komplementäres Kugelgelenkgehäuse (28) aufzunehmen, **dadurch gekennzeichnet, dass** die Schubstange (20) dafür ausgelegt ist, durch Drehung mit einer Halterung (27) eines Kugelgelenkgehäuses (28) nach einem der vorhergehenden Ansprüche zusammengebaut zu werden, und dadurch, dass sie aufweist:
- mindestens eine Kontaktfläche (205, 203), die dafür ausgelegt ist, während des Zusammenbaus durch Drehung mit einem Drehführungselement (271, 273) an der Halterung (27) zusammenzuwirken, und
- mindestens eine Kontaktfläche (208, 209), die dafür ausgelegt ist, in einer Endposition des Zusammenbaus mit einem komplementären Halteelement (277) und/oder Drehsperrelement (279) an der Halterung (27) zusammenzuwirken.

8. Verfahren zum Zusammenbau einer Schubstange (20) eines Gestängesystems (10) zur Betätigung von Scheibenwischern nach dem vorhergehenden Anspruch mit einer Halterung (27) eines Kugelgelenkgehäuses (28) nach einem der Ansprüche 1 bis 6, **dadurch gekennzeichnet, dass** es die folgenden Schritte umfasst:
- Einsetzen des Kugelgelenkgehäuses (28) in eine Öffnung (201) an einem Längsende (20a) der Schubstange (20) durch eine relative Translationsbewegung entlang der Längsachse (B) des Kugelgelenkgehäuses (28),
Ausführen einer relativen Drehbewegung zwischen der Halterung (27) des Kugelgelenkgehäuses (28) und der Schubstange (20) bis zu einer Endposition des Zusammenbaus, in der die Schubstange (20) an mindestens einem Halteelement (277) an der Halterung (27) gehalten wird und durch mindestens ein Drehsperrelement (279) an der Halterung (27) gegen Verdrehen gesichert ist.

## Claims

1. Support (27) for a ball joint housing (28) for a connecting rod (20) of a wiper actuating linkage system (10), the support (27) comprising a ball joint housing (28) extending along a longitudinal axis (B) and configured to be received in a complementary orifice (201) on the connecting rod (20), **characterized in that** the support (27) is configured to be assembled by rotation with the connecting rod (20), and comprises:
- at least one rotational-guidance element (271, 273, 275) guiding the rotation of the connecting rod (20) about the longitudinal axis (B) of the ball joint housing (28) into a final assembly position,
- at least one retaining element (277) configured to collaborate with the connecting rod (20) and keep it in the final assembly position in which it is assembled with the support (27) of the ball joint housing (28), and
- at least one rotation-blocking element (279) configured to prevent the connecting rod (20) from rotating out of the final assembly position,
the support (27) defining a receptacle (29) configured to at least partially receive the connecting rod (20) having an elongate overall shape, in the final assembly position, the receptacle (29) comprising:
a first part (29a) equipped with the ball joint housing (28), configured to receive a longitudinal end (20a) of the connecting rod (20) exhibiting the orifice (201) complementary to the ball joint housing (28), and
a second part (29b) extending transversely with respect to the longitudinal axis (B) of the ball joint housing (28), configured to receive a longitudinal portion (20c) of the connecting rod (20) in the axial continuation of the longitudinal end (20a), and
**characterised in that**
the second part (29b) of the receptacle (29) has at least two opposite rotation-blocking and retaining surfaces (279) between which the longitudinal portion (20c) of the connecting rod (20) is configured to be received in the final assembly position.

2. Support (27) according to Claim 1, wherein the first part (29a) of the receptacle (29) comprises at least one rotational-guidance surface (271, 273) for guiding the longitudinal end (20a) of the connecting rod (20).

3. Support (27) according to Claims 1 or 2, wherein the first part (29a) of the receptacle (29) has an at least partially spherical overall shape and defines at least:
a first angular sector (293) configured to be positioned facing the longitudinal end (20a) of the connecting rod (20) in a first assembly position, and
a second angular sector (295) configured to be positioned facing the longitudinal end (20a) of the connecting rod (20) in the final assembly position.

4. Support (27) according to one of Claims 1 to 3, wherein the receptacle (29) comprises at least one retaining tab (277) having a bearing surface (278) configured to bear against the connecting rod (20) in the final assembly position.

5. Support (27) according to one of Claims 1 to 4, comprising a guide ramp (275) configured to be in contact with the connecting rod (20) during assembly by rotation of the support (27) with the connecting rod (20).

6. Support (27) according to the preceding claim, comprising a leg delimiting one side (297) of the second part (29b) of the receptacle, extending, from the first part (29a) of the receptacle (29), transversely with respect to the longitudinal axis (B) of the ball joint housing (28) and exhibiting the guide ramp (275).

7. System for a linkage assembly comprising a connecting rod and a support according to one of the preceding claims the connecting rod (20) having an elongate overall shape comprising at one longitudinal end (20a) an orifice (201) is configured to be assembled by rotation with a support (27) of a ball joint housing (28) according to one of the preceding claims, and in that it exhibits:
at least one contact surface (205, 203) configured to collaborate with a rotational-guidance element (271, 273) of the support (27) during assembly by rotation, and
at least one contact surface (208, 209) configured to collaborate with a complementary rotation-blocking element (279) and/or retaining element (277) on the support (27) in a final assembly position.

8. Method for assembling a connecting rod (20) of a wiper actuating linkage system (10) according to the preceding claim with a support (27) for a ball joint housing (28) according to one of Claims 1 to 6, **characterized in that** it comprises the following steps:
inserting the ball joint housing (28) into an orifice (201) at one longitudinal end (20a) of the connecting rod (20) using a relative translational movement along the longitudinal axis (B) of the ball joint housing (28),
effecting a movement of relative rotation between the support (27) for the ball joint housing (28) and the connecting rod (20) as far as a final assembly position in which the connecting rod (20) is held against at least one retaining element (277) on the support (27) and blocked against rotation by at least one rotation-blocking element (279) on the support (27).
